# EUROPEAN PATENT APPLICATION

(11) **EP 4 417 855 A1**
(43) Date of publication of application: **21.08.2024**
(21) Application number: 22880662.6
(22) Date of filing: 05.09.2022
(51) Int. Cl.: F16L 55/033, F16L 33/24, F24F 13/02, F24F 13/24, G10K 11/16

(54) **VENTILATION SYSTEM**

(30) Priority: 11.10.2021 JP 2021166659
(71) Applicant: FUJIFILM Corporation, Tokyo 106-8620 (JP)
(72) Inventor: YAMAZOE Shogo, Ashigarakami-gun, Kanagawa 258-8577 (JP); ITAI Yuichiro, Ashigarakami-gun, Kanagawa 258-8577 (JP); HAKUTA Shinya, Ashigarakami-gun, Kanagawa 258-8577 (JP); SUGAWARA Yoshihiro, Ashigarakami-gun, Kanagawa 258-8577 (JP); TAKAHASHI Tomohiro, Ashigarakami-gun, Kanagawa 258-8577 (JP)
(74) Representative: Meissner Bolte Partnerschaft mbB
(86) International application number: PCT/JP2022/033290
(87) International publication number: WO 2023/062966

(57) **Abstract**

Provided is a ventilation system in which a silencer has a compact structure, a silencing property is ensured, and a pressure loss in the silencer is suppressed.

The ventilation system of the present invention has a silencer disposed at an intermediate position of a ventilation path. In the silencer, a sound absorbing member surrounds a housing in which an in-housing ventilation path extending from an inlet opening to an outlet opening is provided. In addition, an upstream tube body that forms an upstream ventilation path on an upstream side of an inlet opening, a downstream tube body that forms a downstream ventilation path on a downstream side of an outlet opening, a tubular first connecting portion that is connected to the upstream tube body and that links the upstream ventilation path and the inlet opening to each other, and a tubular second connecting portion that is connected to the downstream tube body and that links the downstream ventilation path and the outlet opening to each other are provided. Each of the first connecting portion and the second connecting portion includes an opening portion therein. The closer to the in-housing ventilation path, the smaller a size of a cross section of the opening portion of at least one connecting portion.

## Description

### BACKGROUND OF THE INVENTION

### 1. Field of the Invention

The present invention relates to a ventilation system in which a silencer is disposed at an intermediate position of a ventilation path.

### 2. Description of the Related Art

In a configuration where a silencer is disposed at an intermediate position of a ventilation path, it is required for the silencer to sufficiently silence noise propagating in the ventilation path while ensuring a ventilation property in the silencer.

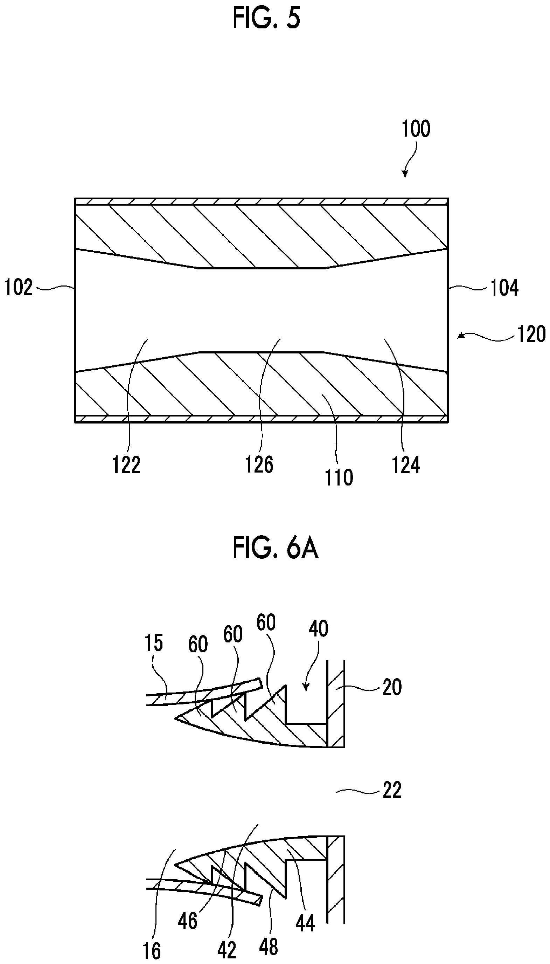

In a ventilation system described in JP4261379B, a box-shaped expansion portion is provided in the middle of a ventilation path, and the expansion portion configures a silencer (see Fig. 5). To describe specifically, inside the expansion portion, the ventilation path (hereinafter, an inner ventilation path) extending from an inlet to an outlet of the expansion portion and a sound absorbing member surrounding the inner ventilation path are disposed. Accordingly, silencing can be performed in the expansion portion while ensuring a ventilation property in the expansion portion.

In addition, in the silencer described in JP4261379B, the ventilation path narrows at an intermediate position of the inner ventilation path and widens on a downstream side thereof (see Fig. 5). Accordingly, as a flow speed of wind (air current) flowing in the ventilation path increases in the inner ventilation path, an effect of the sound absorbing member is more easily exhibited, and accordingly a silencing property improves.

Further, in a case where a size of a cross section of the ventilation path at the intermediate position of the inner ventilation path suddenly changes, a turbulent flow is generated at the place, and as a result, a pressure loss increases relatively. Based on this, since generation of the pressure loss is suppressed in the silencer described in JP4261379B, a cross sectional area of the inner ventilation path is gradually changed at an inlet-side end part and an outlet-side end part of the inner ventilation path, and specifically, the farther from the inlet or the outlet, the larger the cross sectional area. In other words, the closer to the inlet or the outlet, the larger the cross sectional area of the inner ventilation path gradually becomes.

### SUMMARY OF THE INVENTION

However, in a case of changing the cross sectional area of the inner ventilation path, the thickness of the sound absorbing member surrounding the inner ventilation path changes accordingly. For this reason, in the silencer described in JP4261379B, the thickness of the sound absorbing member around the inlet and around the outlet of the expansion portion becomes thin. Decreasing the thickness of the sound absorbing member in this manner can decrease a silencing effect of the silencer. However, in the silencer described in JP4261379B, in a case where an attempt is made to ensure the thickness of the sound absorbing member around the inlet and around the outlet of the expansion portion, the size of the entire silencer increases. As a result, it is necessary to ensure a wider provision space for the silencer.

The present invention is devised in view of the circumstances, and an object thereof is to provide a ventilation system that solves the problems of the related art, specifically, that can ensure a silencing property while a silencer has a compact structure and that can suppress a pressure loss in a ventilation path.

In order to achieve the object, a ventilation system according to an aspect of the present invention has the following configurations.
[1] A ventilation system comprising:
   a ventilation path; and
   a silencer that is disposed at an intermediate position of the ventilation path,
   wherein the silencer includes
      a housing that has an inlet opening and an outlet opening and in which an in-housing ventilation path extending from the inlet opening to the outlet opening is provided inside the ventilation path,
      a sound absorbing member that is disposed in the housing in a state of surrounding the in-housing ventilation path,
      an upstream tube body that forms an upstream ventilation path of the ventilation path, which is on an upstream side of the inlet opening,
      a downstream tube body that forms a downstream ventilation path of the ventilation path, which is on a downstream side of the outlet opening,
      a tubular first connecting portion that is connected to the upstream tube body and that links the upstream ventilation path and the inlet opening to each other, and
      a tubular second connecting portion that is connected to the downstream tube body and that links the downstream ventilation path and the outlet opening to each other,
   each of the first connecting portion and the second connecting portion includes an opening portion therein, and
   the closer to the in-housing ventilation path, the smaller a size of a cross section of the opening portion of at least one connecting portion of the first connecting portion or the second connecting portion.
[2] The ventilation system according to [1],
   in which the closer to the in-housing ventilation path, the smaller the size of the cross section of the opening portion of each of the first connecting portion and the second connecting portion.
[3] The ventilation system according to [1] or [2],
   in which the first connecting portion is connected to the upstream tube body by being inserted into the upstream tube body,
   the second connecting portion is connected to the downstream tube body by being inserted into the downstream tube body,
   each of the first connecting portion and the second connecting portion has an outer peripheral portion surrounding the opening portion, and
   at a tip portion of the at least one connecting portion, the farther from the housing, the smaller a wall thickness of the outer peripheral portion.
[4] The ventilation system according to [3],
   in which at the tip portion of each of the first connecting portion and the second connecting portion, the farther from the housing, the smaller the wall thickness of the outer peripheral portion.
[5] The ventilation system according to any one of [1] to [4],
   in which the in-housing ventilation path extends along a first direction,
   an inner peripheral surface of the at least one connecting portion is inclined with respect to the first direction, and
   an inclined angle of the inner peripheral surface with respect to the first direction is 0.1 degrees or more and 45 degrees or less.
[6] The ventilation system according to any one of [1] to [5],
   in which the in-housing ventilation path extends along a first direction,
   the first connecting portion protrudes from one end of the housing in the first direction,
   the second connecting portion protrudes from the other end of the housing in the first direction, and
   each of the first connecting portion and the second connecting portion has an outer peripheral surface in which unevenness is formed along the first direction.
[7] The ventilation system according to [6],
   in which in each of the first connecting portion and the second connecting portion, the farther from the housing, the smaller an outer diameter of a portion where the outer peripheral surface has a convex shape.
[8] The ventilation system according to any one of [1] to [7],
   in which the in-housing ventilation path extends along a first direction, and
   a range in which the inlet opening is present and a range in which the outlet opening is present are different from each other in a second direction intersecting the first direction and a third direction intersecting both the first direction and the second direction.
[9] The ventilation system according to [8],
   in which a size of a cross section of an end of the opening portion of the at least one connecting portion on an in-housing ventilation path side and a size of an opening of the inlet opening or the outlet opening, which is adjacent to the end, are identical to each other.
[10] The ventilation system according to any one of [1] to [9],
   in which the first connecting portion and the second connecting portion are composed of resin forming products.
[11] The ventilation system according to any one of [1] to [10],
   in which an inner diameter of an end of the opening portion of each of the first connecting portion and the second connecting portion on an in-housing ventilation path side is 150 mm or less.

In the present invention, the closer to the in-housing ventilation path, the smaller the size of the cross section of the opening portion of at least one connecting portion of the first connecting portion or the second connecting portion. Accordingly, without decreasing the thickness of the sound absorbing member in the housing, a silencing property is improved, and a pressure loss in the ventilation path reduces. As a result, a silencing property can be ensured while the silencer has a compact structure, and generation of a pressure loss in the ventilation path can be suppressed.

### BRIEF DESCRIPTION OF THE DRAWINGS

Fig. 1 is a perspective view of a ventilation system according to an embodiment of the present invention.
Fig. 2 is a cross sectional view of the ventilation system according to the embodiment of the present invention and shows a cross section taken along A-A of Fig. 1.
Fig. 3 is a view showing an upstream end surface of a housing included in a silencer.
Fig. 4A is an enlarged cross sectional view of a first connecting portion.
Fig. 4B is an enlarged cross sectional view of a second connecting portion.
Fig. 4C is an explanatory view of a wall thickness of an outer peripheral portion included in a connecting portion.
Fig. 5 is a cross sectional view of a connecting portion according to the related art example.
Fig. 6A is a cross sectional view of a connecting portion according to a first modification example.
Fig. 6B is a cross sectional view of a connecting portion according to a second modification example.
Fig. 6C is a cross sectional view of a connecting portion according to a third modification example.
Fig. 7 is a view showing a modification example of a connection method of the first connecting portion and an upstream tube body.
Fig. 8A is a view showing a model corresponding to the embodiment of the present invention among calculation models of Calculation example 1.
Fig. 8B is a view showing a model corresponding to the related art example among the calculation models of Calculation example 1.
Fig. 9 is a graph showing a relationship between a pressure on an upstream side of the first connecting portion and a flow speed on a downstream side of the first connecting portion, which is acquired in Calculation example 1.
Fig. 10 is a graph showing a relationship between a pressure on the upstream side of the first connecting portion in a case of a flow speed of 20 m/s and an inclined angle of an inner peripheral surface of the first connecting portion.
Fig. 11 is a graph showing a relationship between a pressure on an upstream side of the second connecting portion and a flow speed on a downstream side of the second connecting portion, which is acquired in Calculation example 2.
Fig. 12 is a graph showing a relationship between a pressure on the upstream side of the second connecting portion in a case of a flow speed of 20 m/s and an inclined angle of an inner peripheral surface of the second connecting portion.
Fig. 13A is a schematic view showing a configuration of a ventilation system according to Example 1.
Fig. 13B is a schematic view showing a configuration of a ventilation system according to Comparative example.
Fig. 14 is a graph showing measurement results of a silencing amount of the silencer for each of Example 1 and Comparative example.

### DESCRIPTION OF THE PREFERRED EMBODIMENTS

A ventilation system according to an embodiment of the present invention will be described in detail below with reference to a suitable embodiment shown in the accompanying drawings.

However, the following embodiment is merely an example for facilitating understanding of the present invention and does not limit the present invention. That is, the present invention can be changed or improved from the following embodiment without departing from the gist thereof.

In addition, the material, the shape, or the like of each member used in order to implement the present invention can be determined in any manner in accordance with the purpose of use of the present invention and the technical level or the like at the time of implementation of the present invention. In addition, the present invention includes an equivalent thereof.

In addition, in the present specification, a numerical range represented by using "to" means a range including numerical values before and after "to" as a lower limit value and an upper limit value.

In addition, in the present specification, the terms "orthogonal", "perpendicular", and "parallel" include a range of errors accepted in the technical field to which the present invention belongs. For example, the terms "orthogonal", "perpendicular", and "parallel" in this specification mean being in a range of less than ±10° with respect to being orthogonal, perpendicular, or parallel in a strict sense. An error from being orthogonal or parallel in a strict sense is preferably 5° or less and more preferably 3° or less.

In addition, in the present specification, the meanings of "the same", "identical", "equal", and "homogeneous" can include a range of errors generally accepted in the technical field to which the present invention belongs.

In addition, in this specification, the meanings of "the entire", "any", and "all" can include a range of errors generally accepted in the technical field to which the present invention belongs and can include a case of, for example, 99% or more, 95% or more, or 90% or more in addition to a case of 100%.

In addition, "silencing" in the present invention is a concept including both meanings of sound insulation and sound absorption. Sound insulation means blocking sound, in other words, not allowing transmission of sound. Sound absorption means reducing reflected sound and simply put, means absorbing sound (acoustics) in easy terms.

In addition, hereinafter, three directions orthogonal to each other will be called "XYZ-directions". An X-direction is an extending direction of an in-housing ventilation path 26 to be described later and corresponds to a first direction of the present invention. A Z-direction corresponds to a second direction of the present invention, and a Y-direction corresponds to a third direction of the present invention.

In addition, hereinafter, a side of the ventilation path closer to an air outlet will be called a "downstream side", and a side opposite thereof will be called an "upstream side".

### [About Configuration Example of Ventilation System According to Embodiment of Present Invention]

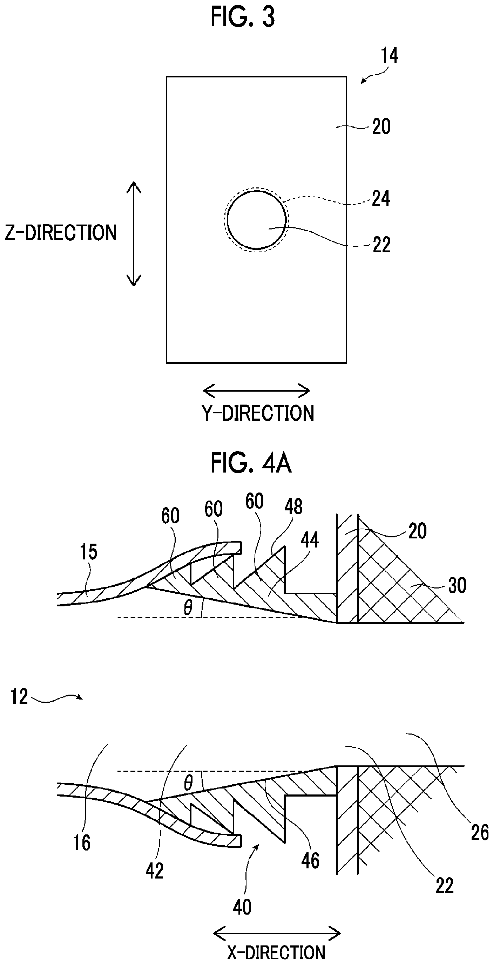

A configuration of a ventilation system 10 according to an embodiment of the present invention (hereinafter, referred to as the present embodiment) will be described with reference to the drawings. Fig. 3 is a view showing an upstream end surface of a housing 20 included in a silencer 14, and an outlet opening 24 that does not appear in the upstream end surface is shown by a broken line in Fig. 3.

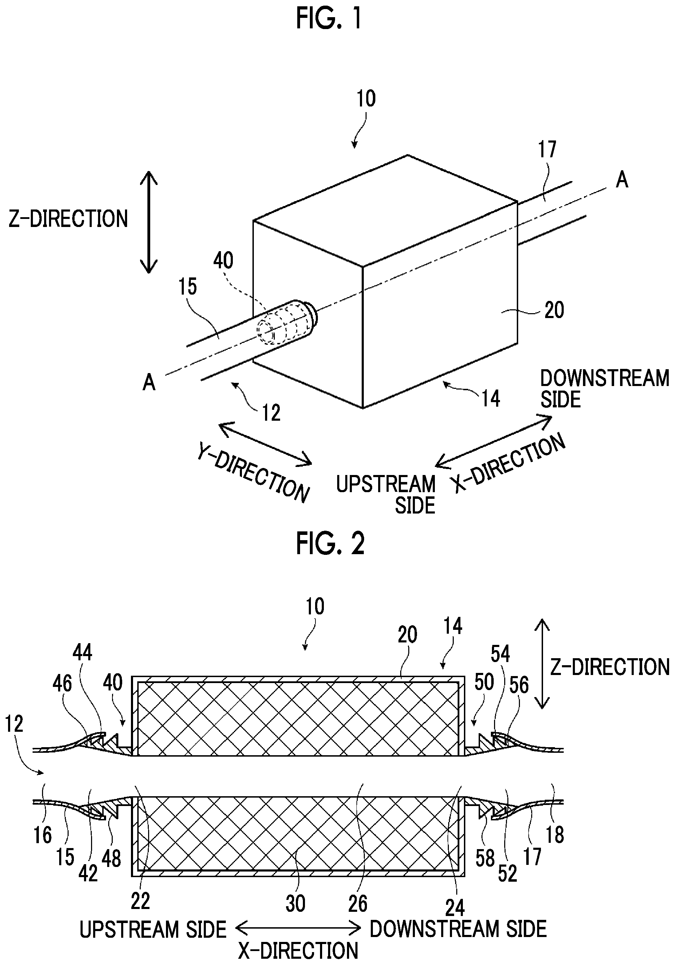

The ventilation system 10 according to the present embodiment silences noise in the system while flowing an air current (wind) along a predetermined route. As shown in Figs. 1 and 2, the ventilation system 10 comprises a ventilation path 12 and the silencer 14 disposed at an intermediate position of the ventilation path 12.

The ventilation path 12 is composed of a tube body, such as a hose and a duct, except for an expansion portion to be described later. The tube body may be a cylinder or a square tube. In the ventilation path 12, an air current (wind) supplied from a non-air supply source flows toward the air outlet positioned at a terminal of the ventilation path 12.

The silencer 14 forms the expansion portion in the ventilation path 12. The expansion portion is a portion of which a cross sectional area of an inner space is wide compared to a portion other than the expansion portion of the ventilation path 12 (hereinafter, also referred to as a general portion). Herein, the term "cross sectional area" corresponds to the size of a cross section, and the cross section is a cross section of which a normal direction is a direction in which the ventilation path 12 extends, in other words, the first direction.

As shown in Figs. 1 to 3, the silencer 14 has the housing 20, a sound absorbing member 30, a first connecting portion 40, and a second connecting portion 50. The silencer 14 silences sound that has entered the housing 20 through resonance (acoustic resonance) in the housing 20 and sound absorption by the sound absorbing member 30.

The housing 20 is a box-shaped or cylindrical hollow body having an outer wall. The outer wall of the housing 20 is a plate material having a relatively thin thickness and forms both end portions of the housing 20 in the XYZ-directions. A material for the outer wall is not particularly limited, and for example, a metal material, a resin material, a reinforced plastic material, a carbon fiber, and the like can be used.

Examples of the metal material include aluminum, titanium, magnesium, tungsten, iron, steel, chromium, chromium molybdenum, nichrome-molybdenum, copper, steel galvanized cold commercial (SGCC), and an alloy, such as stainless steel.

Examples of the resin material include an acrylic resin, polymethyl methacrylate, polycarbonate, polyamide, polyalylate, polyetherimide, polyacetal, polyetheretherketone, polyphenylene sulfide, polysulfone, polyethylene terephthalate, polybutylene terephthalate, polyimide, a copolymer synthetic resin of acrylonitrile, flame-retardant ABS resin, butadiene, and styrene (ABS resin), polypropylene, triacetylcellulose (TAC), polypropylene (PP), polyethylene (PE), polystyrene (PS), an acrylate sthrene acrylonitrile (ASA) resin, a polyvinyl chloride (PVC) resin, and a polylactic acid (PLA) resin.

Examples of the reinforced plastic material include carbon fiber reinforced plastics (CFRP) and glass fiber reinforced plastics (GFRP).

In addition, natural rubber, chloroprene rubber, butyl rubber, ethylene propylene diene rubber (EPDM), silicone rubber, and rubber including a crosslinking structure thereof can be further used as a material for the outer wall of the housing 20.

In addition, each portion of the outer wall of the housing 20 may be composed of an identical material, or a portion of the housing 20 may be composed of a material different from the material for a peripheral portion thereof. Alternatively, a portion of the housing 20 may be made of the same type of material as the peripheral portion and may have a thickness (plate thickness) different from that of the peripheral portion.

As shown in Fig. 2, an inlet opening 22 is provided in an upstream end part of the housing 20 in the X-direction, and the outlet opening 24 is provided in a downstream end part. The inlet opening 22 and the outlet opening 24 are circular holes penetrating the outer wall of the housing 20 in the X-direction and communicate with an inner space of the housing 20. A contour shape of each of the inlet opening 22 and the outlet opening 24 is not limited to a circular shape and may be, for example, a polygonal shape such as a quadrangular shape and a pentagonal shape or more.

An air current in the ventilation path 12 flows from the upstream side of the housing 20 into the housing 20 through the inlet opening 22 and flows out of the housing 20 through the outlet opening 24. That is, the in-housing ventilation path 26 extending from the inlet opening 22 to the outlet opening 24 is formed inside the housing 20, and the in-housing ventilation path 26 configures a part of the ventilation path 12. The in-housing ventilation path 26 linearly extends along the X-direction (first direction). Therefore, the air current (wind) in the housing 20 flows in the X-direction. In other words, the X-direction corresponds to a ventilating direction in the housing 20.

Each of the inlet opening 22 and the outlet opening 24 extends perpendicularly to the outer wall of the housing 20, is formed to penetrate the outer wall, and has a length (depth) corresponding to the thickness of the outer wall. In addition, a diameter (opening size) of each of the inlet opening 22 and the outlet opening 24 is homogeneous over a range from one end on the upstream side to the other end on the downstream side of each opening.

In addition, in the present embodiment, as can be seen from Figs. 2 and 3, a range in which the inlet opening 22 is present and a range in which the outlet opening 24 is present in the Y-direction and the Z-direction overlap each other. Herein, a range in which each opening is present in the Y-direction and the Z-direction is a range in which each opening is present on an imaginary plane (YZ plane) of which a normal direction is the X-direction in a case where each opening is projected on the imaginary plane. As the range in which the inlet opening 22 is present and the range in which the outlet opening 24 is present overlap each other in this manner, ventilation performance in the housing 20 improves, and air (wind) smoothly flows from the inlet opening 22 toward the outlet opening 24.

From a viewpoint of improving ventilation performance in the housing 20, it is preferable that the inlet opening 22 and the outlet opening 24 have an identical size, and the range in which the inlet opening 22 is present and the range in which the outlet opening 24 is present completely match each other. Herein, the size of the opening means the area of the opening.

On the other hand, the sizes of the inlet opening 22 and the outlet opening 24 may be different from each other. In this case, it is preferable that a range in which a smaller opening is present is within a range in which a larger opening is present. In addition, the range in which the inlet opening 22 is present and the range in which the outlet opening 24 is present may partially overlap each other. Alternatively, due to restrictions on the design of the ventilation path or the like, the range in which the inlet opening 22 is present and the range in which the outlet opening 24 is present may not overlap each other and be separated (shifted) from each other in the Y-direction and the Z-direction. In this case, the in-housing ventilation path 26 is not limited to being linearly extending and may be bent at an intermediate position.

In addition, each of the inlet opening 22 and the outlet opening 24 is provided at a central portion of the housing 20 or a portion near an end of the housing 20 in the Z-direction. That is, in a direction intersecting the in-housing ventilation path 26, the inlet opening 22 and the outlet opening 24 may be provided at central portions of the housing 20 or may be provided at positions biased to an end side of the housing 20.

As shown in Fig. 2, the sound absorbing member 30 is disposed in the housing 20 in a state of surrounding the in-housing ventilation path 26. Sound that has entered the housing 20, in particular, high-frequency sound is absorbed. A sound absorbing material that converts sound energy into thermal energy to absorb sound can be used as the sound absorbing member 30 as appropriate. The sound absorbing material is formed in a cylindrical or tubular shape surrounding the entire periphery of the in-housing ventilation path 26 and is disposed in the housing 20.

Examples of the sound absorbing material include a porous sound absorbing material such as a foaming body, a foaming material, and a nonwoven fabric-based sound absorbing material. Specific examples of the foaming body and the foaming material include foaming urethane foam such as CALMFLEX F manufactured by INOAC CORPORATION and urethane foam manufactured by Hikari Co., Ltd., flexible urethane foam, a ceramic particle sintered material, phenol foam, melamine foam, and polyamide foam. Specific examples of the nonwoven fabric-based sound absorbing material include a microfiber nonwoven fabric such as Thinsulate manufactured by 3M Company, a plastic nonwoven fabric such as a polyester nonwoven fabric (including a two-layer fabric that includes a high-density thin nonwoven fabric provided on a surface side and a low-density nonwoven fabric provided on a back side) such as White Kyuon manufactured by TOKYO Bouon and QonPET manufactured by Bridgestone KBG Co., Ltd. and an acrylic fiber nonwoven fabric, a natural fiber nonwoven fabric such as wool and felt, a metal nonwoven fabric, and a glass nonwoven fabric.

In addition to the description above, various sound absorbing materials, such as a sound absorbing material consisting of a material including a minute amount of air, specifically, a sound absorbing material consisting of glass wool, rock wool, and nanofiber-based fiber, can be used as the sound absorbing material forming the sound absorbing member 30. Examples of the nanofiber-based fiber include silica nanofiber and acrylic nanofiber, such as XAI manufactured by Mitsubishi Chemical Corporation.

In addition, in a case where a sound absorbing material is used as the sound absorbing member 30, it is preferable that a flow resistivity of the sound absorbing material is 1,000 (Pa × s/m²) to 100,000 (Pa × s/m²). In a case where the sound absorbing member 30 is a laminated structure obtained by overlapping a plurality of layers, the flow resistance of the entire structure can be measured, and a flow resistivity can be calculated from the thickness of the entire structure.

Further, a sound absorbing body that consists of a plate or a film in which innumerable through-holes having a diameter of approximately 100 µm are formed, such as a micro perforated plate, can be used as the sound absorbing member 30. In this case, sound can be absorbed by the sound absorbing body and a rear space formed on a rear side of the sound absorbing body. Examples of the micro perforated plate include a micro perforated plate made of aluminum, such as SUONO manufactured by DAIKEN CORPORATION, and a micro perforated plate made of a vinyl chloride resin, such as DI-NOC manufactured by 3M Company. In addition, another sound absorbing material may be disposed in the rear space, and a plurality of sound absorbing members 30 may be used in combination.

The sound absorbing member 30 can be considered in other cases. For example, the sound absorbing member 30 may be composed of a plate-shaped body or a film-shaped body that resonates as sound having a frequency close to a resonance frequency is incident thereon and may convert sound energy into thermal energy through the internal loss of the plate or the film to absorb sound. In addition, the sound absorbing member 30 may be a resonator-type sound absorbing structure consisting of a perforated plate. In a case where sound having the same frequency as a resonance frequency hits the sound absorbing member 30, air in hole portions may vibrate and the sound absorbing member 30 may convert sound energy into thermal energy through a viscosity loss in this case. In addition, the sound absorbing structure and another sound absorbing material may be disposed, and the plurality of sound absorbing members 30 may be used in combination.

A part of the sound absorbing member 30 may enter the in-housing ventilation path 26 at the intermediate position of the in-housing ventilation path 26. However, from a perspective of improving a ventilation property in the housing 20, it is preferable that the sound absorbing member 30 is in a state of avoiding the in-housing ventilation path 26, that is, is disposed so as not to enter the in-housing ventilation path 26.

In addition, in order to ensure a ventilation property in the housing 20 while maintaining sound absorption performance in a high frequency band, an occupancy ratio of the sound absorbing member 30 is preferably 80% or more, more preferably 90% or more, and particularly preferably 95%. The occupancy ratio of the sound absorbing member 30 is a ratio (volume ratio) of a region, which is occupied by the sound absorbing member 30, to the volume of a space excluding the in-housing ventilation path 26 in the inner space of the housing 20.

The sound absorbing member 30 fills from one end (an end on the upstream side) to the other end (an end on the downstream side) of the inner space of the housing 20 in the X-direction. On the other hand, a gap between an inner wall surface of the housing 20 and the sound absorbing member 30 in the Y-direction or the Z-direction may be provided, and the sound absorbing member 30 may fill without the gap.

As shown in Fig. 2, the first connecting portion 40 is a tubular portion that protrudes from an edge portion of the inlet opening 22 in one end of the housing 20 in the X-direction (specifically, an edge surface on the upstream side) and functions as a joint of the ventilation path 12. An opening portion 42 consisting of a hole formed in a substantially truncated cone shape or a substantially truncated pyramidal shape is provided on an inner side of the first connecting portion 40. The opening portion 42 is adjacent to the inlet opening 22 and communicates with the in-housing ventilation path 26.

In addition, as shown in Fig. 2, the first connecting portion 40 links an upstream ventilation path 16 and the inlet opening 22 to each other by being connected to an upstream tube body 15. The upstream ventilation path 16 is a portion of the ventilation path 12 positioned on the upstream side of the inlet opening 22. The upstream tube body 15 is a tube body that forms the upstream ventilation path 16, such as a hose and a duct. In the present embodiment, as the first connecting portion 40 is connected to the upstream tube body 15, the upstream ventilation path 16, the opening portion 42, and the in-housing ventilation path 26 are continuously arranged in a straight line.

As shown in Fig. 2, the second connecting portion 50 is a tubular portion that protrudes from an edge portion of the outlet opening 24 in the other end of the housing 20 in the X-direction (specifically, an edge surface on the downstream side) and functions as a joint of the ventilation path 12. An opening portion 52 consisting of a hole formed in a substantially truncated cone shape or a substantially truncated pyramidal shape is provided on an inner side of the second connecting portion 50. The opening portion 52 is adjacent to the outlet opening 24 and communicates with the in-housing ventilation path 26.

In addition, as shown in Fig. 2, the second connecting portion 50 links a downstream ventilation path 18 and the outlet opening 24 to each other by being connected to a downstream tube body 17. The downstream ventilation path 18 is a portion of the ventilation path 12 positioned on the downstream side of the outlet opening 24. The downstream tube body 17 is a tube body that forms the downstream ventilation path 18, such as a hose and a duct. In the present embodiment, as the second connecting portion 50 is connected to the downstream tube body 17, the downstream ventilation path 18, the opening portion 52, and the in-housing ventilation path 26 are continuously arranged in a straight line.

In the present embodiment, the first connecting portion 40 is connected to the upstream tube body 15 as being inserted into the upstream tube body 15 (a hose in the configuration shown in Fig. 2) as shown in Fig. 2. Similarly, the second connecting portion 50 is connected to the downstream tube body 17 as being inserted into the downstream tube body 17 (a hose in the configuration shown in Fig. 2).

In addition, in the present embodiment, each of the first connecting portion 40 and the second connecting portion 50 is composed of a resin molded product, more specifically, a resin formed product produced through injection molding or the like. An example of a resin material configuring each connecting portion is the same as the example of the resin material configuring the housing 20 described above. In addition, in a case where each of the housing 20, the first connecting portion 40, and the second connecting portion 50 is composed of the same type of resin material, the housing 20, the first connecting portion 40, and the second connecting portion 50 may be integrally formed, that is, may be one component.

The first connecting portion 40 and the second connecting portion 50 may be bodies separate from the housing 20. In this case, a unit that attaches the first connecting portion 40 and the second connecting portion 50 to the housing 20 is not particularly limited. For example, a flange may be provided at a base end part of each of the first connecting portion 40 and the second connecting portion 50, and the flange may be fixed to the housing 20 by a screw or the like. Alternatively, the first connecting portion 40 and the second connecting portion 50 may be fixed to the edge surfaces of the housing 20 with an adhesive or the like.

In addition, the first connecting portion 40 and the second connecting portion 50 may be composed of a material different from the housing 20. For example, the housing 20 may be composed of a resin material, and the first connecting portion 40 and the second connecting portion 50 may be composed of a metal material. Alternatively, the housing 20 may be composed of a metal material, and the first connecting portion 40 and the second connecting portion 50 may be composed of a resin material.

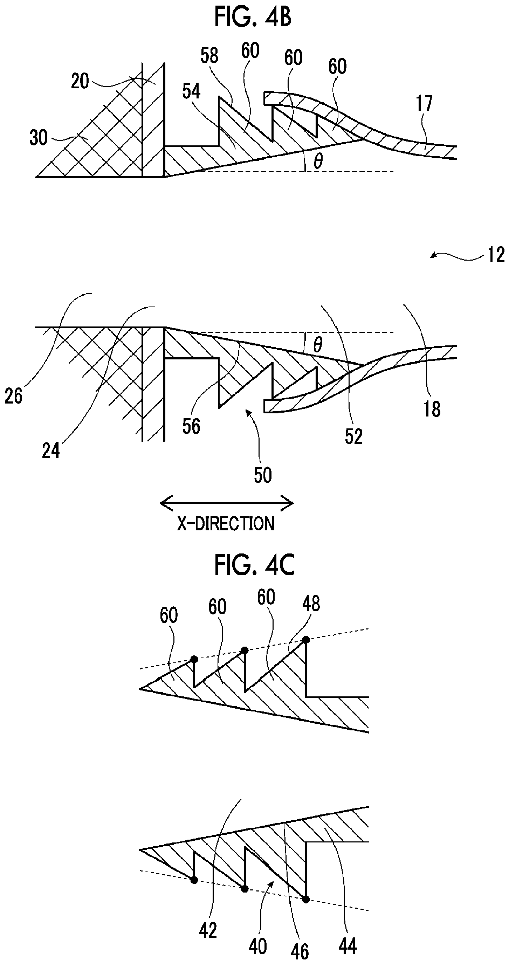

In addition, in the present embodiment, as shown in Figs. 2, 4A, and 4B, the closer to the in-housing ventilation path 26 in the X-direction, the smaller the diameters of the respective opening portions 42 and 52 of the first connecting portion 40 and the second connecting portion 50 gradually become. More specifically, in a portion of the ventilation path 12 adjacent to the in-housing ventilation path 26 (that is, the opening portions 42 and 52), the closer to the in-housing ventilation path 26, the smaller the cross sectional area of the ventilation path 12 gradually becomes. In the present embodiment, the cross sectional areas of the opening portions 42 and 52 linearly change in proportion to a distance from the in-housing ventilation path 26.

With such a configuration, generation of a pressure loss and wind noise in the inlet opening 22 or the outlet opening 24 can be suppressed while enhancing a silencing effect by the silencer 14. To describe more specifically, as the flow speed (wind speed) of an air current in the housing 20 increases, sound absorption performance of the sound absorbing member 30 is effectively exhibited, and a silencing property of the silencer 14 improves. For this reason, in the present embodiment, the cross sectional area of a portion of the ventilation path 12 provided in the housing 20, that is, the in-housing ventilation path 26 is smaller than the cross sectional area of the general portion.

On the other hand, in a case where the cross sectional area of the ventilation path 12 rapidly (discontinuously) changes, a level difference perpendicular to a place where the cross sectional area changes is formed, a turbulent flow is generated on the periphery of the level difference, and as a result, a pressure loss at the place relatively increases. In addition, wind noise is generated in a case where an air current (wind) flowing in the ventilation path 12 passes through the level difference, and the wind noise is propagated to the downstream side as noise in some cases.

In the present embodiment, since a rapid change in the cross sectional area of the ventilation path 12 is suppressed, the cross sectional area of the ventilation path 12 gradually changes. Specifically, the cross sectional area on an inlet opening 22 side gradually decreases toward the downstream side, and the cross sectional area on an outlet opening 24 side gradually decreases toward the upstream side. Accordingly, a pressure loss at a place of the ventilation path 12 where the cross sectional area changes can be decreased, and generation of wind noise can be suppressed.

Herein, in a silencer 100 described in JP4261379B, for the same reasons, the cross sectional area of a central portion 126 of an inner ventilation path 120, which is surrounded by a sound absorbing material 110 in the silencer 100, is even smaller as shown in Fig. 5. Therefore, an inner diameter of an upstream end part 122 decreases toward the downstream side, and an inner diameter of a downstream end part 124 decreases toward the upstream side.

However, in a configuration of the silencer 100, the thickness of the sound absorbing material 110 becomes thin around an inlet opening 102 and around an outlet opening 104 of the silencer 100. Due to the decrease in the thickness of the sound absorbing material 110, there is a possibility that the silencing effect of the silencer 100 decreases. In the configuration of the silencer 100, in a case where an attempt is made to ensure the thickness of the sound absorbing material 110 at each of the inlet opening 102 and the outlet opening 104, the thickness of the sound absorbing material 110 increases as a whole, so that the size of the silencer 100 increases. In this case, it is necessary to ensure a wider provision space for the silencer 100, and a place for providing the silencer 100 can be restricted.

On the contrary, in the silencer 14 of the present embodiment, in the first connecting portion 40 and the second connecting portion 50 on an outer side of the housing 20 accommodating the sound absorbing member 30, the closer to the in-housing ventilation path 26, the smaller the cross sectional area of the ventilation path 12. Accordingly, without decreasing the thickness of the sound absorbing member 30 in the housing 20, the in-housing ventilation path 26 can be made narrower than the general portion. As a result, without impairing a silencing property, a pressure loss in the ventilation path 12 can be reduced, and generation of wind noise is suppressed.

As described above, the silencer 14 of the present embodiment can exhibit a good silencing property while having a compact structure and can decrease a pressure loss in the ventilation path 12.

To describe the configuration of each of the first connecting portion 40 and the second connecting portion 50 more specifically, the first connecting portion 40 and the second connecting portion 50 have outer peripheral portions 44 and 54 surrounding the opening portions 42 and 52, respectively, as shown in Figs. 4A and 4B. The outer peripheral portions 44 and 54 have inner peripheral surfaces 46 and 56 facing the opening portions 42 and 52 and outer peripheral surfaces 48 and 58 positioned on an opposite side to the inner peripheral surfaces 46 and 56, respectively.

The respective inner peripheral surfaces 46 and 56 of the first connecting portion 40 and the second connecting portion 50 are tapered surfaces as shown in Figs. 4A and 4B and are inclined with respect to the X-direction (first direction). In the present embodiment, the tapered surface is a surface in which the size of a cross section of which a normal direction is the X-direction changes concentrically.

In addition, an inclined angle of each portion of the inner peripheral surfaces 46 and 56 with respect to the X-direction is 0.1 degrees or more and 45 degrees or less. The inclined angle of each portion of the inner peripheral surfaces 46 and 56 is an angle at which a bus bar of each portion of the inner peripheral surfaces 46 and 56 in a circumferential direction of the inner peripheral surfaces 46 and 56 is inclined with respect to the X-direction (in a strict sense, an acute angle) and is indicated by a symbol θ in Figs. 4A and 4B. The bus bar of each portion of the inner peripheral surfaces 46 and 56 is an intersection line between a cut surface orthogonal to the inner peripheral surfaces 46 and 56 at each portion and the inner peripheral surfaces 46 and 56.

The inclined angle θ may be homogeneous in the circumferential direction of the inner peripheral surfaces 46 and 56 or may change according to positions in the circumferential direction. In addition, the magnitude of the inclined angle θ is preferably 0.1 degrees to 30 degrees, more preferably 0.1 degrees to 20 degrees, and particularly preferably 0.1 degrees to 10 degrees.

In addition, in the present embodiment, as shown in Fig. 2, a cross sectional area of a downstream end (that is, an end on an in-housing ventilation path 26 side) of the opening portion 42 of the first connecting portion 40 and an opening area of the inlet opening 22 adjacent to the downstream end are identical to each other. Similarly, a cross sectional area of an upstream end (that is, an end on the in-housing ventilation path 26 side) of the opening portion 52 of the second connecting portion 50 and an opening area of the outlet opening 24 adjacent to the upstream end are identical to each other. Herein, the opening area of each of the inlet opening 22 and the outlet opening 24 is a size of each opening and is an area surrounded by the edge of the opening.

With the configuration, a level difference is not formed at a boundary position between the opening portion 42 of the first connecting portion 40 and the inlet opening 22 and a boundary position between the opening portion 52 of the second connecting portion 50 and the outlet opening 24. Accordingly, a defect caused by the level difference, specifically, generation of a pressure loss and wind noise caused by generation of a turbulent flow around the level difference can be suppressed.

As shown in Figs. 4A and 4B, each of the first connecting portion 40 and the second connecting portion 50 is composed of a hose nipple type joint. In other words, unevenness is formed along the X-direction in the outer peripheral surfaces 48 and 58 of the respective connecting portions.

To describe specifically, in the respective outer peripheral portions 44 and 54 of the first connecting portion 40 and the second connecting portion 50, the outer peripheral surfaces 48 and 58 are provided by connecting a plurality of portions having a convex shape (hereinafter, convex portions 60) in the X-direction. In each convex portion 60, the outer peripheral surfaces 48 and 58 project to the outer side at an end on a side closest to the housing 20, and the farther from the housing 20, the smaller the outer diameter of the convex portion 60 gradually becomes. That is, each convex portion 60 has a tapered shape.

With the configuration above, the first connecting portion 40 inserted inside the upstream tube body 15 consisting of a hose or the like can be prevented from coming off the upstream tube body 15, and a connection state of the upstream tube body 15 and the first connecting portion 40 can be well maintained. Similarly, the second connecting portion 50 inserted inside the downstream tube body 17 consisting of a hose or the like can be prevented from coming off the downstream tube body 17, and a connection state of the downstream tube body 17 and the second connecting portion 50 can be well maintained.

In addition, due to the tapered shape of the convex portion 60 described above, adhesiveness between the upstream tube body 15 and the first connecting portion 40 and adhesiveness between the downstream tube body 17 and the second connecting portion 50 can be enhanced. Accordingly, airtightness of the ventilation path 12, in particular, the upstream ventilation path 16 and the downstream ventilation path 18 is enhanced.

In addition, in the present embodiment, as shown in Figs. 4A and 4B, at a tip portion (an end part on an opposite side to the housing 20) of each of the first connecting portion 40 and the second connecting portion 50, the farther from the housing 20, the smaller wall thicknesses of the outer peripheral portions 44 and 54. Herein, the wall thicknesses correspond to intervals between the inner peripheral surfaces 46 and 56 and the outer peripheral surfaces 48 and 58 of the outer peripheral portions 44 and 54, respectively.

In a case where the outer peripheral portions 44 and 54 comprise the plurality of convex portions 60 that are uneven structures and that are arranged in the X-direction, as shown in Fig. 4C, the wall thicknesses are defined with imaginary planes (shown by broken lines in Fig. 4C) passing through a place of each convex portion 60 protruding most to the outer side as the outer peripheral surfaces 48 and 58.

With the configuration above, in a case where the first connecting portion 40 is inserted into the upstream tube body 15 consisting of a hose or the like, as shown in Fig. 4A, an end part (a portion overlapping the first connecting portion 40) of the upstream tube body 15 gently bends along the outer peripheral surface 48 of the first connecting portion 40. Accordingly, the inner peripheral surface 46 of the first connecting portion 40 and an inner surface of the upstream tube body 15 are smoothly connected to each other, and formation of a level difference between the surfaces can be suppressed. As a result, at a connection place between the upstream tube body 15 and the first connecting portion 40, generation of a pressure loss and wind noise caused by level difference formation can be suppressed.

Similarly, in a case where the second connecting portion 50 is inserted into the downstream tube body 17 consisting of a hose or the like, as shown in Fig. 4B, an end part (a portion overlapping the second connecting portion 50) of the downstream tube body 17 gently bends along the outer peripheral surface 58 of the second connecting portion 50. Accordingly, the inner peripheral surface 56 of the second connecting portion 50 and an inner surface of the downstream tube body 17 are smoothly connected to each other, and formation of a level difference between the surfaces can be suppressed. As a result, at a connection place between the downstream tube body 17 and the second connecting portion 50, generation of a pressure loss and wind noise caused by level difference formation can be suppressed.

In the configurations shown in Figs. 4A and 4B, at the tip portion of each of the first connecting portion 40 and the second connecting portion 50, the farther from the housing 20, the smaller the wall thicknesses of the outer peripheral portions 44 and 54. However, without being limited thereto, over the entire range from a tip to a base end of each connecting portion, the farther from the housing 20, the smaller the wall thicknesses of the outer peripheral portions 44 and 54 may become.

In addition, in the present embodiment, an inner diameter of the downstream end (the end on the in-housing ventilation path 26 side) of the opening portion 42 of the first connecting portion 40, that is, a minimum value of the inner diameter of the opening portion 42 is 150 mm or less. Similarly, an inner diameter of the upstream end (the end on the in-housing ventilation path 26 side) of the opening portion 52 of the second connecting portion 50, that is, a minimum value of the inner diameter of the opening portion 52 is than 150 mm or less. In general, in the ventilation path of which the inner diameter is 150 mm or less, the flow speed of an air current (wind) in the ventilation path becomes relatively high. Under the circumstances where the flow speed is high, an effect enabled by the ventilation system 10 of the present embodiment is significant. That is, as the flow speed becomes high, the pressure loss increases, and wind noise is easily generated. However, with the configuration described above, generation of a pressure loss and wind noise in the silencer 14 is effectively suppressed.

In the present embodiment, since the inner diameter of the end on the in-housing ventilation path 26 side of each of the opening portions 42 and 52 is 150 mm or less, the flow speed of the in-housing ventilation path 26 is, for example, 10 m/s or more under a general ventilation amount. Under such circumstances, an effect of suppressing generation of a pressure loss and wind noise in the silencer 14 is well exhibited.

In addition, the inner diameter of the end on the in-housing ventilation path 26 side of each of the opening portions 42 and 52 is preferably 150 mm or less, more preferably 100 mm or less, and particularly preferably 50 mm or less. In addition, the inner diameter is preferably 1 mm or more from a perspective of forming accuracy.

### [Other Embodiments]

The specific example of the configuration of the ventilation system 10 described above is merely an example, and other configuration examples can also be considered.

Although the closer to the in-housing ventilation path 26, the smaller the cross sectional areas (the sizes of the cross sections) of the respective opening portions 42 and 52 of the first connecting portion 40 and the second connecting portion 50 in the embodiment described above, the invention is not limited thereto. The closer to the in-housing ventilation path 26, the smaller the cross sectional area of any one of the opening portion 42 or 52 may become.

Although at the tip portion of each of the first connecting portion 40 and the second connecting portion 50, the farther from the housing 20, the smaller the wall thicknesses of the outer peripheral portions 44 and 54 in the embodiment described above, the invention is not limited thereto. The farther from the housing 20, the smaller the wall thicknesses of the outer peripheral portions 44 and 54 at any one tip portion may become.

In the embodiment described above, the cross sectional areas of the respective opening portions 42 and 52 of the first connecting portion 40 and the second connecting portion 50 linearly change in proportion to a distance from the in-housing ventilation path 26 in the X-direction. However, without being limited thereto, as shown in Fig. 6A, the cross sectional areas of the opening portions 42 and 52 may change non-linearly, for example, exponentially with respect to the distance from the in-housing ventilation path 26. That is, the respective inner peripheral surfaces 46 and 56 of the first connecting portion 40 and the second connecting portion 50 which are the tapered surfaces may be surfaces curved with respect to the X-direction.

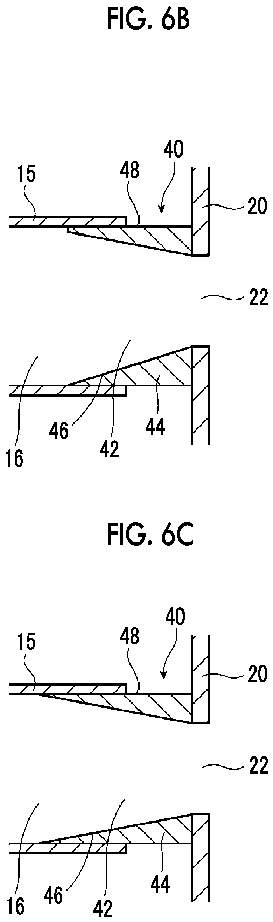

In addition, the inner peripheral surfaces 46 and 56 are surfaces in which the sizes of cross sections, of which normal directions are the X-direction, change concentrically in the embodiment described above, but without being limited thereto, as shown in Fig. 6B, may be surfaces in which the sizes of the cross sections change eccentrically.

Although the respective outer peripheral surfaces 48 and 58 of the first connecting portion 40 and the second connecting portion 50 are surfaces in which unevenness is formed along the X-direction in the embodiment described above, the invention is not limited thereto. For example, as shown in Fig. 6C, the outer peripheral surfaces 48 and 58 may be smooth surfaces in which unevenness is not formed.

In the embodiment described above, the first connecting portion 40 is inserted into the upstream tube body 15 and is connected to the upstream tube body 15, and the second connecting portion 50 is inserted into the downstream tube body 17 and is connected to the downstream tube body 17. However, a connecting mode of each connecting portion is not particularly limited. In a state where a tip of the first connecting portion 40 and a tip of the upstream tube body 15 abut against each other, both may be connected to each other. Similarly, in a state where a tip of the second connecting portion 50 and a tip of the downstream tube body 17 abut against each other, both may be connected to each other.

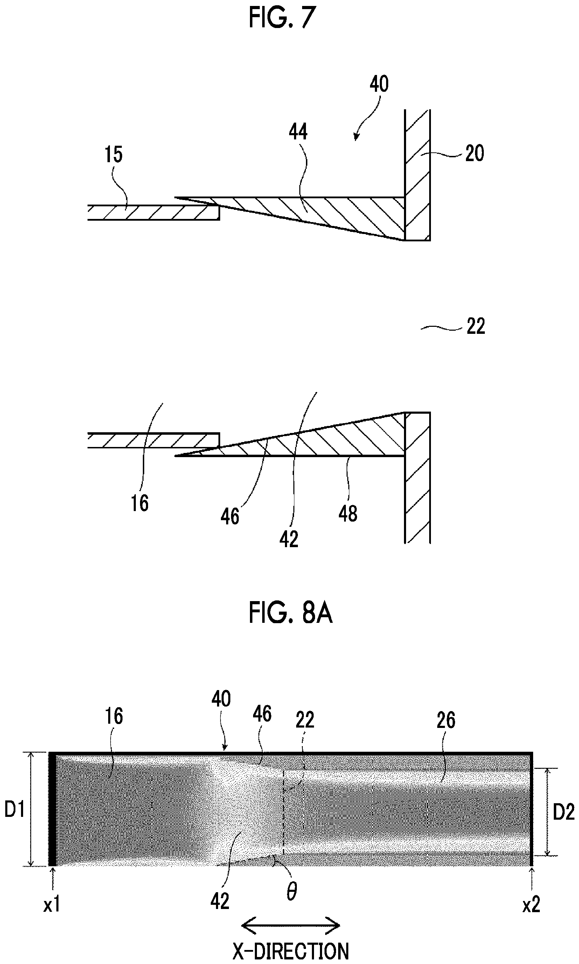

Alternatively, as shown in Fig. 7, in a state where a tip part of the upstream tube body 15 is inserted into the first connecting portion 40, and the first connecting portion 40 and the tip part of the upstream tube body 15 overlap each other, both may be connected to each other. Similarly, in a state where a tip part of the downstream tube body 17 is inserted into the second connecting portion 50, and the second connecting portion 50 and the tip part of the downstream tube body 17 overlap each other, both may be connected to each other.

### Examples

Hereinafter, the present invention will be more specifically described with reference to Examples. A material, an amount used, a proportion, process contents, process procedures, and the like shown in the following Examples can be changed as appropriate without departing from the gist of the present invention. Therefore, the scope of the present invention is not to be construed as limiting by Examples shown below.

### [Calculation Examples Related to Pressure Loss]

In the ventilation system according to the embodiment of the present invention, the closer to the in-housing ventilation path, the smaller the cross sectional area of the opening portion of each of the first connecting portion and the second connecting portion gradually becomes, so that a pressure loss in the ventilation path can be decreased. In view of this point, a relationship between a degree of change in the cross sectional area of the opening portion and the pressure loss was acquired through calculation.

Hereinafter, conditions and calculation results of each Calculation example will be described.

### (Calculation Example 1)

In Calculation example 1, a pressure loss in a case of passing through the opening portion 42 was acquired for each of a case where the cross sectional area of the opening portion 42 of the first connecting portion 40 changed (hereinafter, a case 1A) and a case where the cross sectional area did not change (hereinafter, a case 1B).

In the case 1A, a calculation model in which the upstream ventilation path 16, the opening portion 42, and the in-housing ventilation path 26 were configured as in Fig. 8A was adopted. In addition, an inclined angle (indicated by the symbol θ in Fig. 8A) of a tapered surface forming the inner peripheral surface 46 of the first connecting portion 40 was defined as a degree of change in the cross sectional area of the opening portion. The inclined angle θ was set to 50 degrees, 45 degrees, 27 degrees, 15 degrees, and 9 degrees.

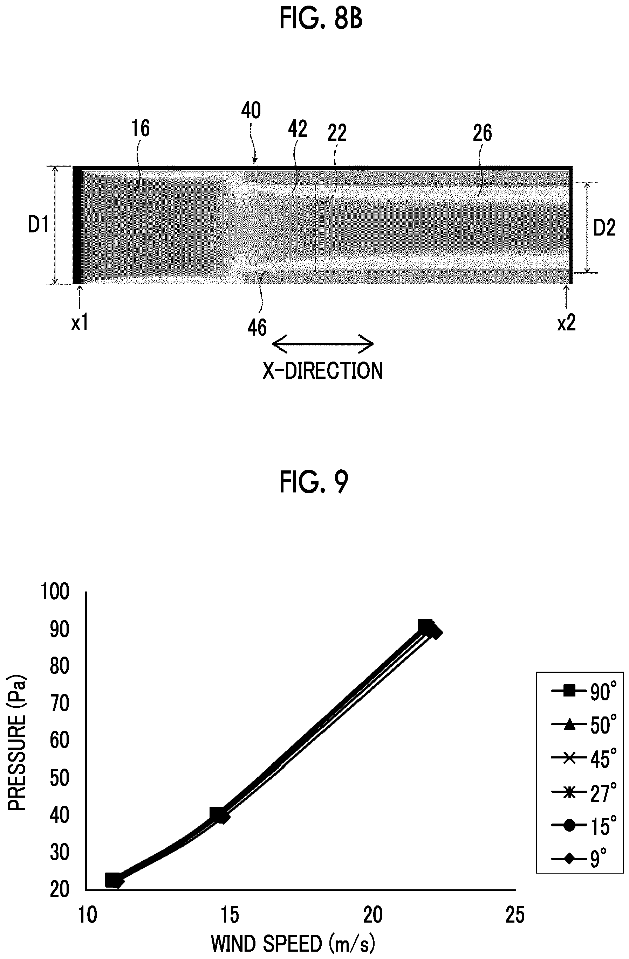

In the case 1B, a calculation model in which the upstream ventilation path 16, the opening portion 42, and the in-housing ventilation path 26 were configured as in Fig. 8B was adopted. In the model, a perpendicular level difference path was formed between the opening portion 42 and the upstream ventilation path 16. In other words, the inclined angle θ was 90 degrees.

In each case, an inner diameter (written as D1 in Figs. 8A and 8B) of the upstream ventilation path 16 was set to 30 mm, and an inner diameter (written as D2 in Figs. 8A and 8B) of the in-housing ventilation path 26 was set to 24 mm. In addition, in the case 1A, a minimum value of the inner diameter of the opening portion 42 was set to the inner diameter D2 of the in-housing ventilation path 26.

Then, in each case, a relationship between a pressure at a predetermined position (a position written as x1 in Figs. 8A and 8B) of the upstream ventilation path 16 and a flow speed at a predetermined position (a position written as x2 in Figs. 8A and 8B) of the in-housing ventilation path 26 was acquired. Specifically, a value of the flow speed at the position x2 was set, and a pressure required at the position x1 in order to achieve the set flow speed was acquired. In addition, for each inclined angle θ, a set value of the flow speed at the position x2 was changed, and a pressure at the position x1 was acquired for each set value. The flow speed was set to approximately 10 m/s, approximately 15 m/s, and approximately 23 m/s.

In the calculation, Flowsquare4.0 which was fluid calculation software was used.

Calculation results in Calculation example 1 are shown in Fig. 9. In addition, from the calculation results shown in Fig. 9, an approximate curve showing a relationship between a pressure at the position x1 and a flow speed (wind speed) at the position x2 was acquired for each inclined angle θ.

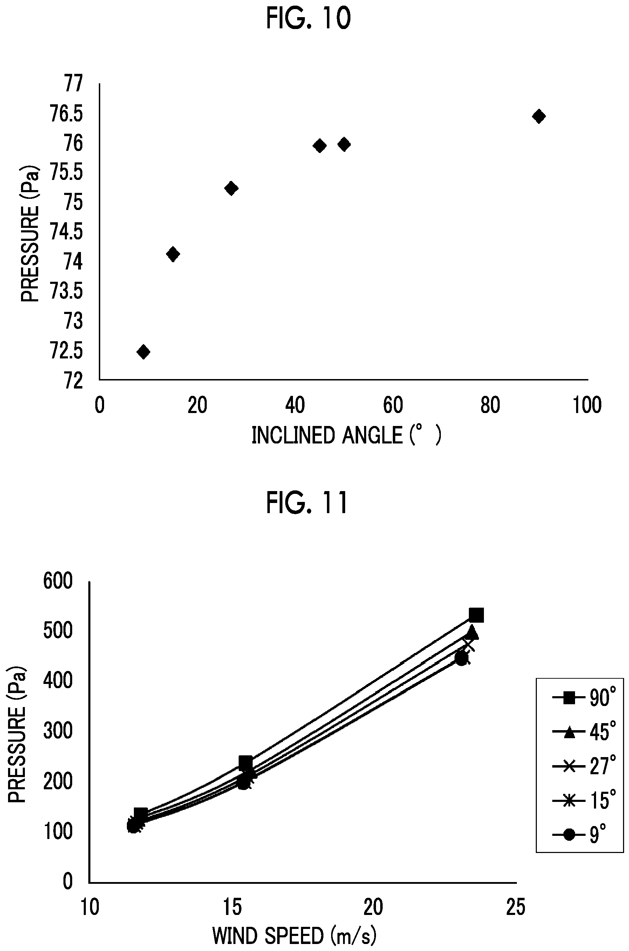

Further, from the approximate curve, the pressure at the position x1 in a case where the flow speed at the position x2 reached a predetermined value (specifically, 20 m/s) was acquired for each inclined angle θ. A relationship between the inclined angle θ and the pressure at the position x1, which was obtained in this manner, is shown in Fig. 10.

As can be seen from Fig. 10, in a case where the inclined angle θ was 45 degrees or less, a pressure at the position x1 decreased. For this reason, it was found that by making the inclined angle θ 45 degrees or less, a resistance between the opening portion 42 of the first connecting portion 40 and the upstream ventilation path 16 was significantly reduced, and generation of a pressure loss at the position was suppressed. In addition, from Fig. 10, it was found that a degree of reduction in the pressure loss increased as the inclined angle θ decreased. For this reason, it is considered that the inclined angle θ is preferably 30 degrees or less, more preferably 20 degrees or less, and particularly preferably 10 degrees or less.

### (Calculation Example 2)

In Calculation example 2, a pressure loss in a case of passing through the opening portion 52 was acquired for each of a case where the cross sectional area of the opening portion 52 of the second connecting portion 50 changed (hereinafter, a case 2A) and a case where the cross sectional area did not change (hereinafter, a case 2B).

In the case 2A, a calculation model in which the in-housing ventilation path 26, the opening portion 52, and the downstream ventilation path 18 had a configuration where Fig. 8A was reversed right and left was used. In addition, the inclined angle θ of a tapered surface forming the inner peripheral surface 56 of the second connecting portion 50 was defined as a degree of change in the cross sectional area of the opening portion. The inclined angle θ was set to 45 degrees, 27 degrees, 15 degrees, and 9 degrees.

In the case 2B, a calculation model in which the in-housing ventilation path 26, the opening portion 52, and the downstream ventilation path 18 had a configuration where Fig. 8B was reversed right and left was used. In the model, a perpendicular level difference path was formed between the opening portion 52 and the downstream ventilation path 18. In other words, the inclined angle θ was 90 degrees.

In each case, an inner diameter of the downstream ventilation path 18 was set to 30 mm, and an inner diameter of the in-housing ventilation path 26 was set to 24 mm. In addition, in the case 2A, a minimum value of the inner diameter of the opening portion 52 was set to the inner diameter of the in-housing ventilation path 26.

Then, in each case, in the same manner as in Calculation example 1, a relationship between a pressure at the predetermined position x1 of the in-housing ventilation path 26 and a flow speed (wind speed) at the predetermined position x2 of the downstream ventilation path 18 was acquired. Calculation results in Calculation example 2 are shown in Fig. 11.

In addition, from the calculation results shown in Fig. 11, an approximate curve showing a relationship between a pressure at the predetermined position x1 of the in-housing ventilation path 26 and a flow speed at the predetermined position x2 of the downstream ventilation path 18 was acquired for each inclined angle θ.

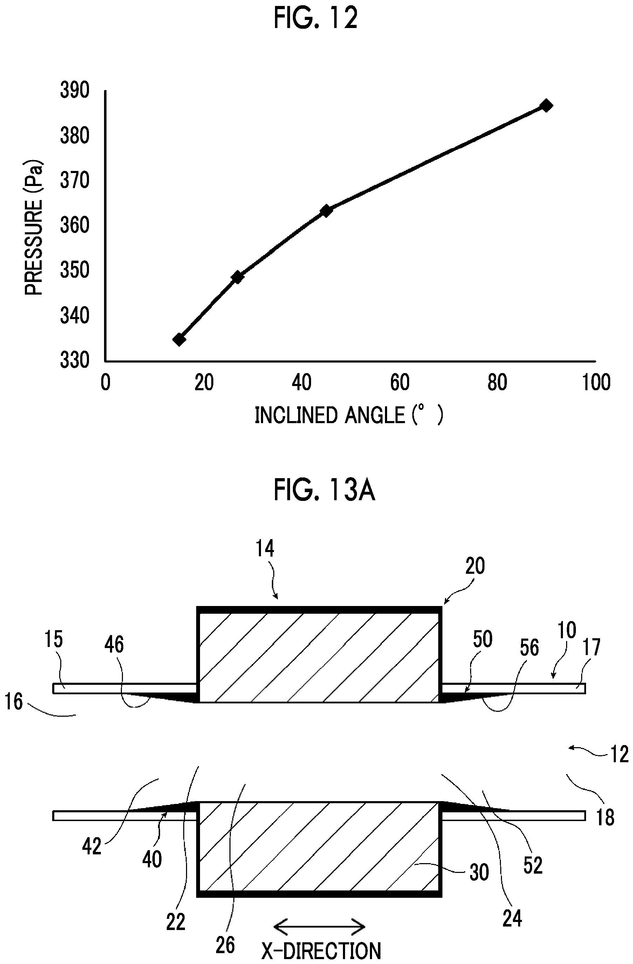

Further, from the approximate curve, the pressure at the predetermined position x1 of the in-housing ventilation path 26 in a case where the flow speed at the predetermined position x2 of the downstream ventilation path 18 reached 20 m/s was acquired for each inclined angle θ. A relationship between the inclined angle θ and the pressure at the predetermined position x1 of the in-housing ventilation path 26, which was obtained in this manner, is shown in Fig. 12.

As can be seen from Fig. 12, in a case where the inclined angle θ was 45 degrees or less, a pressure at the predetermined position x1 of the in-housing ventilation path 26 decreased. For this reason, it was found that by making the inclined angle θ 45 degrees or less, a resistance between the opening portion 52 of the second connecting portion 50 and the downstream ventilation path 18 was significantly reduced, and generation of a pressure loss at the position was suppressed. In addition, from Fig. 12, it can be seen that a degree of reduction in the pressure loss increased as the inclined angle θ decreased. For this reason, it is considered that the inclined angle θ is preferably 30 degrees or less, more preferably 20 degrees or less, and particularly preferably 10 degrees or less.

### [Example 1]

In Example 1, the ventilation system 10 shown in Fig. 13A was produced. In Example 1, a pipe made of polyvinyl chloride (PVC) having an inner diameter of 70 mm and a length of 250 mm in the X-direction was used as the housing 20 of the silencer 14.

In addition, the sound absorbing member 30 consisting of a cylindrical sound absorbing material in which a hole having an inner diameter of 24 mm was open was disposed inside the housing 20.

In addition, the first connecting portion 40 was provided at an upstream end of the housing 20, and the second connecting portion 50 was provided at a downstream end. The length (protruding length) of each of the first connecting portion 40 and the second connecting portion 50 in the X-direction was 50 mm.

In addition, the closer to the housing 20, the smaller the cross sectional areas of the respective opening portions 42 and 52 of the first connecting portion 40 and the second connecting portion 50. In addition, an inner diameter of the end of each of the opening portions 42 and 52 on the side closest to the housing 20, that is, a minimum value of the inner diameter was 24 mm.

In addition, the inclined angles of the respective inner peripheral surfaces 46 and 56 of the first connecting portion 40 and the second connecting portion 50 were set to 3 degrees.

In addition, by connecting a hose made of a resin, which formed the upstream tube body 15 or the downstream tube body 17, to each of the first connecting portion 40 and the second connecting portion 50, the silencer 14 was disposed at the intermediate position of the ventilation path 12.

In Example 1, silencing characteristics of the silencer 14 were measured for the ventilation system 10 configured as described above. Specifically, a hose made of a resin, which was connected to one connecting portion, was connected to a speaker, which was a sound source, and white noise was flowed from the speaker. In addition, a hose made of a resin, which was connected to the other connecting portion, was disposed in a reverberant chamber, and a sound pressure in a case of flowing white noise was measured in the reverberant chamber.

Measurement of the sound pressure was made in each of a case where there was the silencer 14 and a case where there was no silencer 14, and a silencing amount of the silencer 14 was calculated from a difference between both measurement results.

In addition, in Example 1, the hose made of a resin connected to the one connecting portion was connected to a fan (not shown), and a wind speed meter was attached to the hose made of a resin, which was connected to the other connecting portion. Then, a wind speed in a case where the fan was driven while changing an applied voltage to the fan (in other words, a rotation speed of the fan) and the silencer 14 was used was measured by the wind speed meter at a hose terminal.

### [Comparative Example]

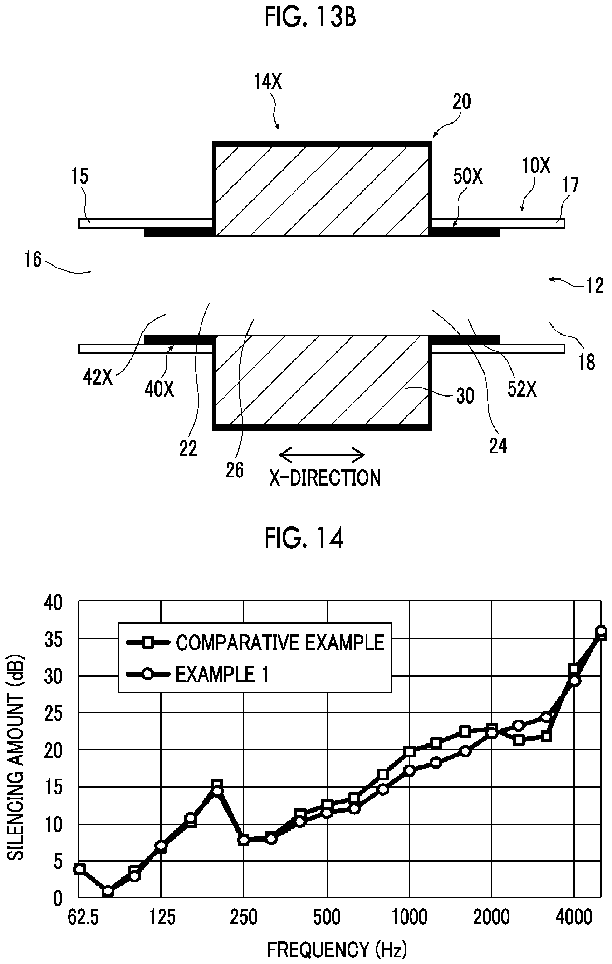

In Comparative example, a ventilation system 10X shown in Fig. 13B was produced. In Comparative example, cross sectional areas of respective opening portions 42X and 52X of a first connecting portion 40X and a second connecting portion 50X were constant. To describe more specifically, in Comparative example, each of inner diameters of the opening portions 42X and 52X was constant specifically at 24 mm without being changed over a range from one end to the other end of the opening portion.

For other points, a configuration of the ventilation system 10X of Comparative example was common to the configuration of the ventilation system 10 of Example 1.

In Comparative example, according to the same procedures as in Example 1, a sound pressure in the reverberant chamber was measured for each of a case where there was a silencer 14X and a case where there was no silencer 14X, and a silencing amount of the silencer 14X was calculated from a difference between both measurement results.

In addition, in Comparative example, according to the same procedures as in Example 1, a wind speed in a case where the fan was driven while changing an applied voltage to the fan (rotation speed) and the silencer 14X was used was measured.

### [Measurement Results of Example 1 and Comparative Example]

Measurement results of the silencing amount of the silencer for each of Example 1 and Comparative example are shown in Fig. 14. A horizontal axis of Fig. 14 indicates a frequency of sound (the unit is Hz), and a vertical axis indicates a silencing amount (the unit is dB). As can be seen from Fig. 14, in Example 1 and Comparative example, the same degree of silencing amount was obtained. For this reason, it was found that an effect of the inclined angle of the inner peripheral surface (tapered surface) of each of the first connecting portion and the second connecting portion on the silencing amount was relatively small.

In addition, for each of Example 1 and Comparative example, measurement results of the wind speed in a case where the silencer was used are shown in Table 1.

**[Table 1]**

| | Wind speed (m/s) | |
|---|---|---|
| Voltage (V) | Comparative Example | Example 1 |
| 1.0 | 13.4 | 14.9 |
| 1.5 | 29.8 | 29.8 |
| 2.0 | 43.2 | 44.7 |
| 2.5 | 56.6 | 58.1 |
| 4.0 | 92.3 | 93.8 |

As can be seen from Table 1, a wind speed in a case where an applied voltage to the fan was adjusted to each set value of Table 1 was larger in Example 1 than in Comparative example. For this reason, in Example 1, it was found that a pressure loss in the ventilation path was smaller than Comparative example, and ventilation performance was improved.

The case 1A of Calculation example 1, the case 2A of Calculation example 2, and Example 1, which have been described hereinbefore, are within the scope of the present invention, and effects of the present invention are clear from calculation results or measurement results in the examples.

### Explanation of References

10, 10X: ventilation system
12: ventilation path
14, 14X: silencer
15: upstream tube body
16: upstream ventilation path
17: downstream tube body
18: downstream ventilation path
20: housing
22: inlet opening
24: outlet opening
26: in-housing ventilation path
30: sound absorbing member
40, 40X: first connecting portion
42, 42X: opening portion
44: outer peripheral portion
46: inner peripheral surface
48: outer peripheral surface
50, 50X: second connecting portion
52, 52X: opening portion
54: outer peripheral portion
56: inner peripheral surface
58: outer peripheral surface
60: convex portion
100: silencer
102: inlet opening
104: outlet opening
110: sound absorbing material
120: inner ventilation path
122: upstream end part
124: downstream end part
126: central portion

## Claims

1. A ventilation system comprising:
a ventilation path; and
a silencer that is disposed at an intermediate position of the ventilation path,
wherein the silencer includes
a housing that has an inlet opening and an outlet opening and in which an in-housing ventilation path extending from the inlet opening to the outlet opening is provided inside the ventilation path,
a sound absorbing member that is disposed in the housing in a state of surrounding the in-housing ventilation path,
an upstream tube body that forms an upstream ventilation path of the ventilation path, which is on an upstream side of the inlet opening,
a downstream tube body that forms a downstream ventilation path of the ventilation path, which is on a downstream side of the outlet opening,
a tubular first connecting portion that is connected to the upstream tube body and that links the upstream ventilation path and the inlet opening to each other, and
a tubular second connecting portion that is connected to the downstream tube body and that links the downstream ventilation path and the outlet opening to each other,
each of the first connecting portion and the second connecting portion includes an opening portion therein, and
the closer to the in-housing ventilation path, the smaller a size of a cross section of the opening portion of at least one connecting portion of the first connecting portion or the second connecting portion.

2. The ventilation system according to claim 1,
wherein the closer to the in-housing ventilation path, the smaller the size of the cross section of the opening portion of each of the first connecting portion and the second connecting portion.

3. The ventilation system according to claim 1,
wherein the first connecting portion is connected to the upstream tube body by being inserted into the upstream tube body,
the second connecting portion is connected to the downstream tube body by being inserted into the downstream tube body,
each of the first connecting portion and the second connecting portion has an outer peripheral portion surrounding the opening portion, and
at a tip portion of the at least one connecting portion, the farther from the housing, the smaller a wall thickness of the outer peripheral portion.

4. The ventilation system according to claim 3,
wherein at the tip portion of each of the first connecting portion and the second connecting portion, the farther from the housing, the smaller the wall thickness of the outer peripheral portion.

5. The ventilation system according to claim 1,
wherein the in-housing ventilation path extends along a first direction,
an inner peripheral surface of the at least one connecting portion is inclined with respect to the first direction, and
an inclined angle of the inner peripheral surface with respect to the first direction is 0.1 degrees or more and 45 degrees or less.

6. The ventilation system according to claim 1,
wherein the in-housing ventilation path extends along a first direction,
the first connecting portion protrudes from one end of the housing in the first direction,
the second connecting portion protrudes from the other end of the housing in the first direction, and
each of the first connecting portion and the second connecting portion has an outer peripheral surface in which unevenness is formed along the first direction.

7. The ventilation system according to claim 6,
wherein in each of the first connecting portion and the second connecting portion, the farther from the housing, the smaller an outer diameter of a portion where the outer peripheral surface has a convex shape.

8. The ventilation system according to claim 1,
wherein the in-housing ventilation path extends along a first direction, and
a range in which the inlet opening is present and a range in which the outlet opening is present are different from each other in a second direction intersecting the first direction and a third direction intersecting both the first direction and the second direction.

9. The ventilation system according to claim 8,
wherein a size of a cross section of an end of the opening portion of the at least one connecting portion on an in-housing ventilation path side and a size of an opening of the inlet opening or the outlet opening, which is adjacent to the end, are identical to each other.

10. The ventilation system according to claim 1,
wherein the first connecting portion and the second connecting portion are composed of resin forming products.

11. The ventilation system according to claim 1,
wherein an inner diameter of an end of the opening portion of each of the first connecting portion and the second connecting portion on an in-housing ventilation path side is 150 mm or less.
